# FASCICULE DE BREVET EUROPEEN

(11) **EP 0 557 211 B1**
(45) Date de publication et mention de la délivrance du brevet: **20.03.1996**
(21) Numéro de dépôt: 93420030.4
(22) Date de dépôt: 22.01.1993
(51) Int. Cl.: C08G 12/32, C04B 24/22, C04B 24/30

(54) **Produits de condensation à base d'aldehyde et amines et leur utilisation comme agents fluidifiants**
Kondensationsprodukte auf der Basis von Aldehyd und Aminen und deren Verwendung als Verflüssigungsmittel
Condensation products based on aldehyde and amine, and their use as fluidizers

(30) Priorité: 18.02.1992 FR 9202065
(43) Date de publication de la demande: 25.08.1993
(73) Titulaire: CHRYSO S.A., F-91383 Chilly-Mazarin (FR)
(72) Inventeur: Sers, Alphonse, F-45470 Loury (FR); Bisson, Didier, F-45300 Pithiviers (FR); Mosquet, Martin, F-45300 Pithiviers (FR)
(74) Mandataire: Varnière-Grange, Monique

(56) Documents cités:
- EP-A- 0 059 353
- EP-A- 0 099 954
- EP-A- 0 115 022
- FR-A- 2 322 112
- Derwent Publications Ltd., London, GB; AN 76-80215X; & JP-A-51 101 797

## Description

La présente invention concerne des produits de condensation et leur utilisation comme agents fluidifiants pour liants hydrauliques tels que les ciments, les plâtres et la chaux.

Il est connu d'ajouter aux liants hydrauliques tels que les ciments, les plâtres et la chaux, des fluidifiants pour diminuer la teneur en eau de la pâte de liant hydraulique. L'accumulation d'eau dans les espaces vacants est alors moindre. De ce fait, la pâte de liant hydraulique présente après durcissement une structure plus dense. Ceci se traduit par une résistance mécanique plus élevée.

Les fluidifiants proposés dans l'art antérieur sont généralement à base de résines obtenues par condensation de naphtalène sulfoné avec du formaldéhyde ou par condensation de mélamine avec du formaldéhyde et un composé sulfoné.

Ainsi, le brevet européen n° 99 954 concerne des fluidifiants hydrosolubles obtenus par condensation d'acide amino-sulfonique comportant au moins un noyau aromatique avec des produits azotés porteurs de plusieurs fonctions amines et du formaldéhyde, le rapport molaire de l'acide amino-sulfonique au produit azoté étant compris entre 1,05 et 1,3.

La condensation est réalisée en une seule étape par chauffage pendant 1 heure à 65°C d'un mélange de mélamine, d'acide neutralisé et de formaldéhyde.

L'inconvénient majeur des résines obtenues de cette manière est leur insuffisance d'activité. De plus, de telles résines ne peuvent pas être disponibles en solution de concentration supérieure à 30 % car l'augmentation de la concentration entraîne celle de la viscosité, ce qui limite leur usage.

Le brevet américain n° 4 430 469 propose alors un procédé qui permet de préparer, en deux étapes, des solutions aqueuses concentrées et à faible viscosité de résines mélamine / aldéhyde.

Dans une première étape, on fait réagir de la mélamine et un aldéhyde en milieu alcalin en présence d'un sulfite, d'un acide amino-sulfonique ou d'un acide amino-carboxylique. Le produit de condensation ainsi obtenu est ensuite mis en contact, dans une seconde étape, avec un acide amino-carboxylique, un acide aminosulfonique ou de l'acide sulfamique. Le pH est ajusté à une valeur basique. L'incorporation des résines ainsi obtenues dans des liants hydrauliques est susceptible d'en améliorer les propriétés mécaniques.

Les résines obtenues par ce procédé conduisent toutefois à des résultats pour le moins aléatoires lorsqu'elles sont incorporées dans les liants hydrauliques dont il a été question ci-avant.

Un des buts de l'invention est donc de pallier les inconvénients énoncés ci-dessus en proposant de nouveaux produits de condensation utilisables en tant qu'agents fluidifiants.

Les produits faisant l'objet de la présente invention sont susceptibles d'être obtenus par condensation en milieu aqueux de
- au moins un composé (a) disposant d'au moins deux fonctions amines, avec
- au moins un aldéhyde (b),
- au moins un acide (c), comportant au moins un groupement SH, ou un sel d'un tel acide,
- au moins un acide (d) comportant au moins une fonction amine ou un sel d'un tel acide,
- et éventuellement un ou plusieurs composés (e) susceptibles de libérer un ou plusieurs ions sulfonates.

La demanderesse propose en effet des produits à base de composés à plusieurs fonctions amines, d'aldéhydes et d'acides, dans lesquels, de façon surprenante, les acides peuvent être liés par un atome de soufre.

Dans les produits de condensation de l'art antérieur, au contraire, les acides ne sont liés que par des atomes d'azote provenant d'une fonction amine.

Ce nouveau pontage par un atome de soufre modifie bien entendu la structure des produits en cause et est responsable, au moins dans une large mesure, des valeurs élevées des pouvoirs fluidifiants.

Ces nouveaux produits confèrent en outre aux liants hydrauliques auxquels ils sont incorporés, des propriétés mécaniques étonnamment élevées et supérieures à celles conférées par les produits de l'art antérieur.

Divers autres caractéristiques et avantages des produits de l'invention apparaîtront à la lecture de la description détaillée faite ci-après, notamment référencée à quelques exemples et tableaux mentionnés à simple titre d'illustration.

La nature précise des composés (a) n'est pas fondamentale dès lors qu'ils présentent au moins deux fonctions amines.

A titre d'exemple de composé (a), on peut citer les guanamines, l'urée, la thiourée et la mélamine. On utilise de préférence la mélamine.

Comme aldéhyde (b) on peut mettre en oeuvre par exemple, l'acétaldéhyde ou le formaldéhyde sous toute forme connue de l'homme de l'art. Ainsi, lorsque l'on recourt au formaldéhyde, ce qui constitue une variante avantageuse de l'invention, on l'engage de préférence sous forme de formol, de formaline, de paraformaldéhyde ou de glyoxal.

L'acide (c) peut être choisi dans le groupe constitué par les acides mercaptosulfoniques et les acides mercapto-carboxyliques. Par acide mercapto-carboxylique, on entend un composé organique comportant au moins un groupement carboxyle et au moins un groupement SH.

Par acide mercapto-sulfonique, on entend un composé organique comportant au moins un groupement SO₃H et au moins un groupement SH. Bien entendu le groupement SH et la fonction acide SO₃H ou COOH peuvent être portés par le même atome de carbone.

L'acide (c) peut être de nature aliphatique, cyclique ou aromatique. De préférence, l'acide (c) comporte de 1 à 20 atomes de carbone. Il s'avère avantageux de mettre en oeuvre un acide (c) choisi parmi les acides mercapto-carboxyliques.

A titre d'exemple d'acide mercapto-carboxylique, on peut citer l'acide thiomaléique (ou mercaptobutanedioïque), l'acide thioglycolique (ou mercaptoacétique), l'acide mercapto-2 propionique, l'acide mercapto-3 propionique, les acides mercapto-benzoïques (en particulier l'acide ortho-mercapto-benzoïque ou thiosalycilique) et leurs homologues substitués.

L'acide (d) peut être choisi dans le groupe constitué par les acides aminosulfoniques, les acides amino-carboxyliques et l'acide sulfamique.

Par acide amino-sulfonique, on entend un composé organique comportant au moins un groupement SO₃H et au moins une fonction amine.

Par acide amino-carboxylique, on entend un composé organique comportant au moins un groupement carboxyle et au moins une fonction amine.

La fonction amine et la fonction acide SO₃H ou COOH peuvent être portées par le même atome de carbone.

L'acide (d) peut être de nature aliphatique, cyclique ou aromatique. De préférence, l'acide (d) comporte de 1 à 20 atomes de carbone.

Il s'avère avantageux de mettre en oeuvre un acide (d) choisi parmi les acides amino-sulfoniques.

De préférence l'acide (d) mis en oeuvre est l'acide p-amino-benzènesulfonique.

Il va de soi que les différents acides peuvent être introduits sous forme de leurs sels. On utilisera alors de préférence les sels hydrosolubles tels que les sels alcalins, les sels alcalino-terreux, les sels d'ammonium quaternaire.

A titre d'exemple de composé (e), on peut citer les sulfites, les hydrogénosulfites et les métabisulfites hydrosolubles.

De préférence, le composé (e) est choisi parmi les sulfites, les hydrogénosulfites et les métabisulfites de métal alcalin ou alcalino-terreux.

Les produits de l'invention peuvent être préparés par une réaction de condensation.

On fait réagir de préférence les différents réactifs en milieu aqueux, à pH compris entre 5 et 9.

La température réactionnelle peut varier entre 10 °C et 100 °C et de préférence entre 70 °C et 75 °C.

La durée réactionnelle est comprise entre 10 minutes et 10 heures.

La réaction de condensation est mise en oeuvre de préférence dans l'air et à pression atmosphérique, mais étant donné qu'elle a lieu en phase liquide, il va de soi qu'il est possible de la mettre en oeuvre dans d'autres atmosphères gazeuses, à des pressions différentes, de manière connue de l'homme de l'art.

Une fois la condensation terminée, on peut ajuster le pH ou la densité de façon connue.

Le milieu réactionnel contenant les produits de condensation se présente sous la forme d'une résine fluide. Il n'a pas besoin de traitement supplémentaire pour être utilisé comme fluidifiant.

Les produits de l'invention sont de préférence obtenus par condensation des réactifs dans les proportions suivantes, rapportées à une mole de composé (a) :
- de 1,8 à 8 moles et de préférence de 2, 5 à 4, 5 moles d'aldéhyde (b),
- de 0,1 à 2 moles et de préférence de 0,1 à 0,5 mole d'acide (c) comportant au moins un groupement SH,
- de 0,1 à 2 moles et de préférence de 0,8 à 1,2 mole d'acide (d) comportant au moins une fonction amine,
- et éventuellement de 0,1 à 2 moles et de préférence de 0,8 à 1,2 mole de composé (e).

Selon un mode de réalisation préféré de l'invention, les produits de condensation sont préparés à partir d'un acide sulfonique et d'un acide carboxylique dont l'un comporte un groupement SH, et l'autre un groupement NH₂.

On choisit alors de préférence un rapport R du nombre de moles de fonctions acides carboxyliques sur le nombre de mole de fonctions acides sulfoniques compris entre 0,25 et 0,45 et de préférence un rapport R' du nombre total de moles de fonctions acides sur le nombre de moles de composé (a) compris entre 1,2 et 1,3.

En effet, les mesures effectuées en faisant varier R montrent que ces proportions permettent d'obtenir une fluidité maximale comme l'indique le tableau (IV) ci-après.

Les fluidifiants de l'invention peuvent être incorporés dans la pâte cimentière composée du liant hydraulique d'eau et des divers additifs et charges connus de l'homme du métier, dans une proportion comprise entre 0,01 % et 25 %, de préférence inférieure à 5 %, suivant la fluidité et les résistances mécaniques finales recherchées, le pourcentage étant exprimé en nombre de litres de fluidifiant ajouté par kg de ciment.

On trouvera maintenant dans les exemples ci-après, donnés à titre non limitatif, la description de composés selon l'invention ainsi que la détermination des performances auxquelles conduisent les bétons, obtenus après incorporation des fluidifiants selon l'invention.

### EXEMPLE 1 : Préparation de la résine n°1

On introduit 0,9 mole d'acide p-sulfanilique et 0,35 mole d'acide thioglycolique dans de l'eau. Le pH est ajusté à une valeur comprise entre 5,5 et 5,9 avec de la soude, la température est maintenue à 70°C.

On introduit 1 mole de mélamine, puis progressivement 3,5 moles de formaldéhyde sous forme de solution aqueuse à 37 %. On laisse réagir pendant 2 heures, en veillant à ce que la température n'excède pas 75°C.

Une fois le pH stabilisé vers 11,5/12, on ajoute de l'acide thioglycolique en solution aqueuse à 25% jusqu'à ce que le pH redescende vers 8/9 et s'y stabilise. Après refroidissement à 20°C, on ajuste la densité à 1,2 en diluant avec de l'eau.

La solution aqueuse de fluidifiant (résine 1) présente les caractéristiques suivantes :
- pH 8,5
- Densité à 20°C 1,2
- Extrait sec environ 40%

### EXEMPLE 2

On prépare 4 résines différentes (désignées par résine 2 à 5 dans le tableau (I) ci-après) conformément à l'exemple 1.

### EXEMPLE 3

Les pouvoirs fluidifiants des résines 1 à 5 ont été évalués au travers des fluidités des échantillons de liant hydraulique auxquels ont été incorporées les résines, à raison de 1% en masse par rapport au ciment.

Les fluidités ont été déterminées à l'aide de la méthode dite du "mini-slump" mise au point par la Portland Cement Association. Cette méthode est utilisée pour déterminer la consistance des pâtes de ciment et apprécier les effets des adjuvants sur les pâtes de ciment. Puisque ces pâtes de ciment peuvent devenir très fluides, il est pratique de mesurer la surface de base du "pâté" formé lors du test.

La méthode nécessite un mini-cône en résine acrylique solide, un mélangeur, un bêcher en acier de 250 ml, une feuille plate acrylique de 6 mm d'épaisseur et un disque en polyéthylène de 50 mm de diamètre et 0,1 mm d'épaisseur.

Mise en oeuvre de la méthode : on prépare une pâte avec 70 grammes de ciment et la quantité d'eau correspondant au rapport eau/ciment souhaité.

La pâte est introduite dans le bêcher et malaxée pendant 2 minutes à 250 tr/min. On la laisse ensuite reposer 3 minutes durant lesquelles le bécher est recouvert pour éviter toute évaporation.

La pâte est ensuite introduite dans le cône préablement placé sur le disque.

Durant cette opération, les bulles d'air sont chassées à l'aide d'une spatule avec laquelle un mouvement de cisaille de bas en haut est effectué le long de la paroi interne du cône.

L'ensemble de l'opération de remplissage du cône ne doit pas durer plus d'une minute.

Le cône est ensuite enlevé. Cet enlèvement doit être suffisamment rapide pour que l'intérieur reste exempt de pâte de ciment mais pas trop, pour ne pas soulever la pâte lors du démoulage.

On laisse durcir le "pâté" obtenu à l'air et durant 24 heures pour qu'il soit manipulable. Il est placé ensuite délicatement sur une feuille de papier et la surface de base est déterminée. Si le "pâté" se casse lors de la manipulation, on se servira de la trace laissée sur le disque en plastique.

Les conditions particulières ainsi que les résultats obtenus sont rassemblés dans le tableau (I) ci-après, dans lequel on a également indiqué les résultats obtenus pour un échantillon ne contenant pas de fluidifiant (témoin).

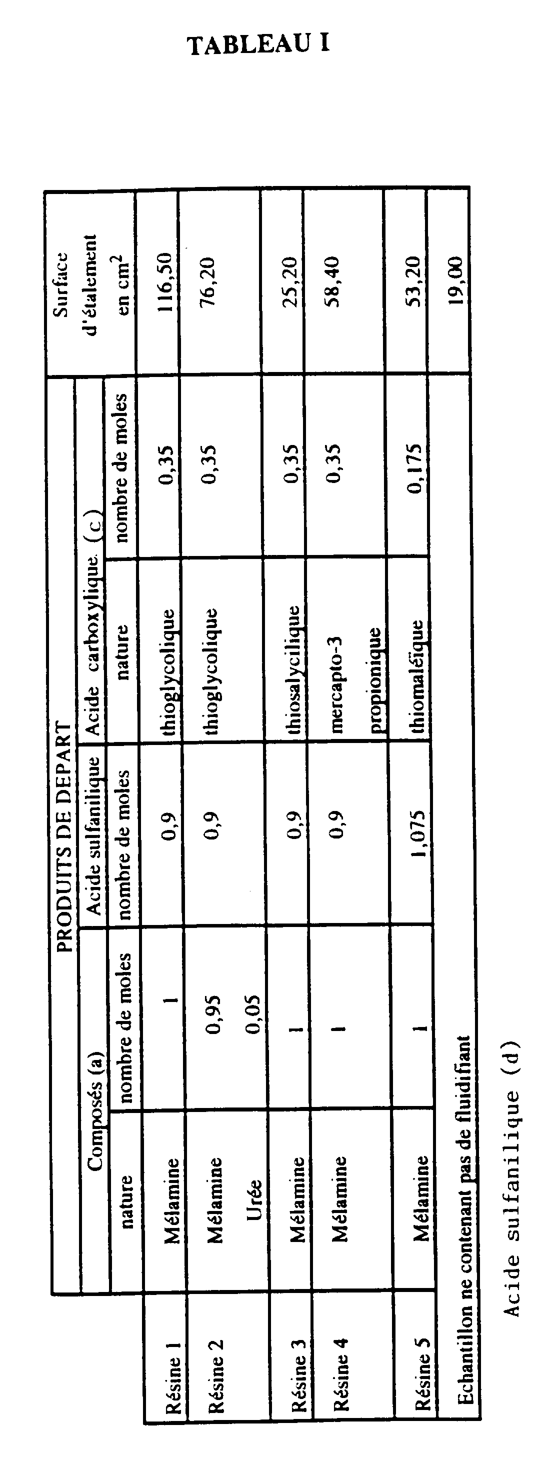

### EXEMPLE 4 : Comparaison des pouvoirs fluidifiants des produits de l'invention à ceux des fluidifiants de l'art antérieur.

On procède à deux nouvelles séries de mesures selon la méthode du "mini-slump" décrite dans l'exemple 3, à ceci près que la pâte de liant hydraulique est composée de 18,6 % de sable F1 et 81,40 % de ciment HPR St Pierre la Cour commercialisé par la société Ciments Lafarge. Le rapport massique eau/ciment choisi est de 0,36 environ.

La quantité d'adjuvant est de 1 litre pour 100 kg de ciment dans la série 1 et de 1,33 litres pour 100 kg de ciment dans la série 2.

La nature de l'adjuvant est indiquée dans les tableaux II(A) et II(B) ci-après qui correspondent respectivement à la série 1 et à la série 2 et dans lesquels
- GT désigne la résine réalisée selon le brevet européen n° 99 954 et commercialisée par la société CHRYSO,
- Rhéobuilt 2000 PF désigne la résine commercialisée par la société M.B.T.,
- Sikament FF86 désigne la résine commercialisée par la société SIKA.

Les résultats sont obtenus par comparaison des surfaces d'étalement.

**TABLEAU II(A)**

| Adjuvant | Surface en cm2 |
|---|---|
| Résine GT | 40,10 |
| Résine n°1 | 88,30 |
| Rhéobuilt 2000 PF | 48,30 |

**TABLEAU II(B)**

| Adjuvant | Surface en cm2 |
|---|---|
| Résine GT | 50,00 |
| Résine n°1 | 155,00 |
| Sikament FF86 | 109,00 |

### EXEMPLE 5

Evaluation des propriétés mécaniques induites par les produits selon l'invention et comparaison avec celles induites par les fluidifiants du commerce.

Les résultats ont été regroupés dans le tableau (III) suivant, dans lequel
- RR désigne la Résine Rhéobuilt 2000 PF commercialisée par la société M.B.T.,
- GT désigne la résine réalisée selon le brevet européen n° 99 954, commercialisée par la société CHRYSO,
- Rési désigne la résine Resiflow N40, commercialisée par la société C.I.A.,
- R1 désigne la résine n°1,
- Agi désigne la résine Agiplast commercialisée par la société CHRYSO,
- Qua signifie qualité,
- Pds signifie poids,
- Moulet désigne le sable de qualité 0/4 commercialisé par Les Gravières Moulet,
- (1) signifie que les échantillons ont été étuvés pendant 5h 30 à 75°C,
- (2) signifie que les échantillons ont été étuvés pendant 16 heures à 60°C,
- (3) signifie que les échantillons ont été étuvés pendant 20 heures à 50-55°C.

Les mesures de résistances mécaniques ont été effectuées conformément à la norme NF P18-406 ou ISO 4012.

L'absence d'indication de la quantité d'eau signifie que les échantillons ont été réalisés avec la même plasticité.

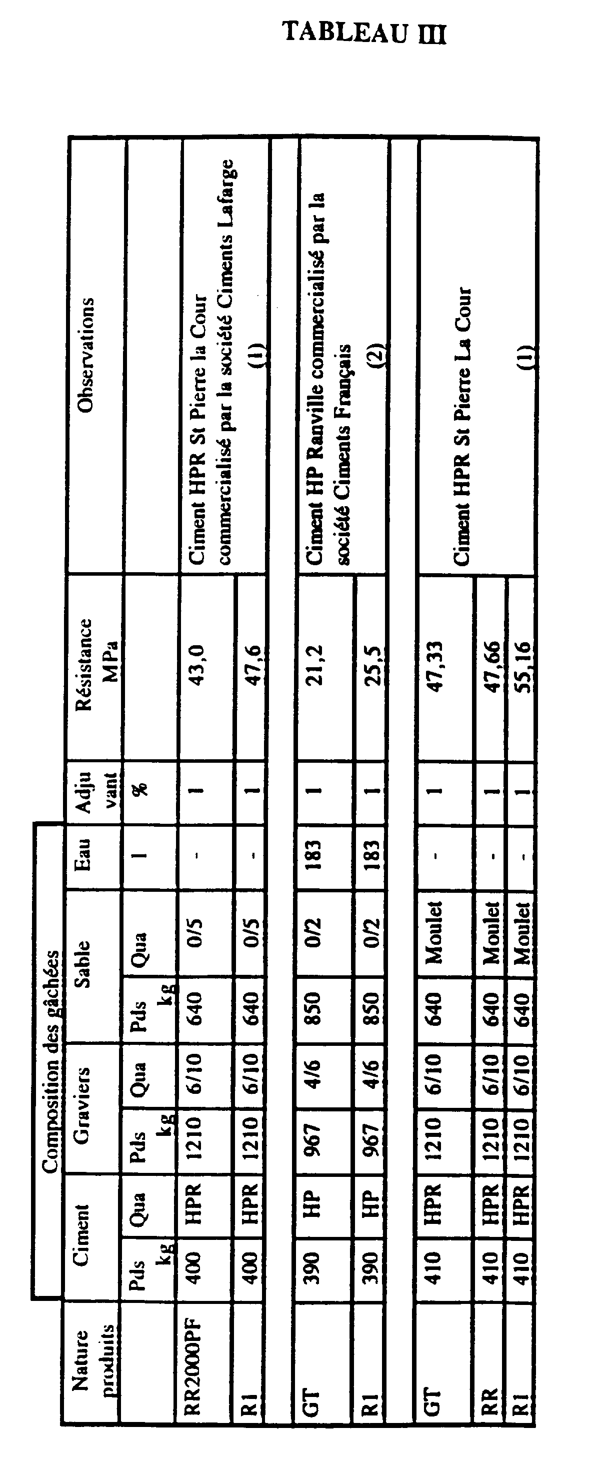

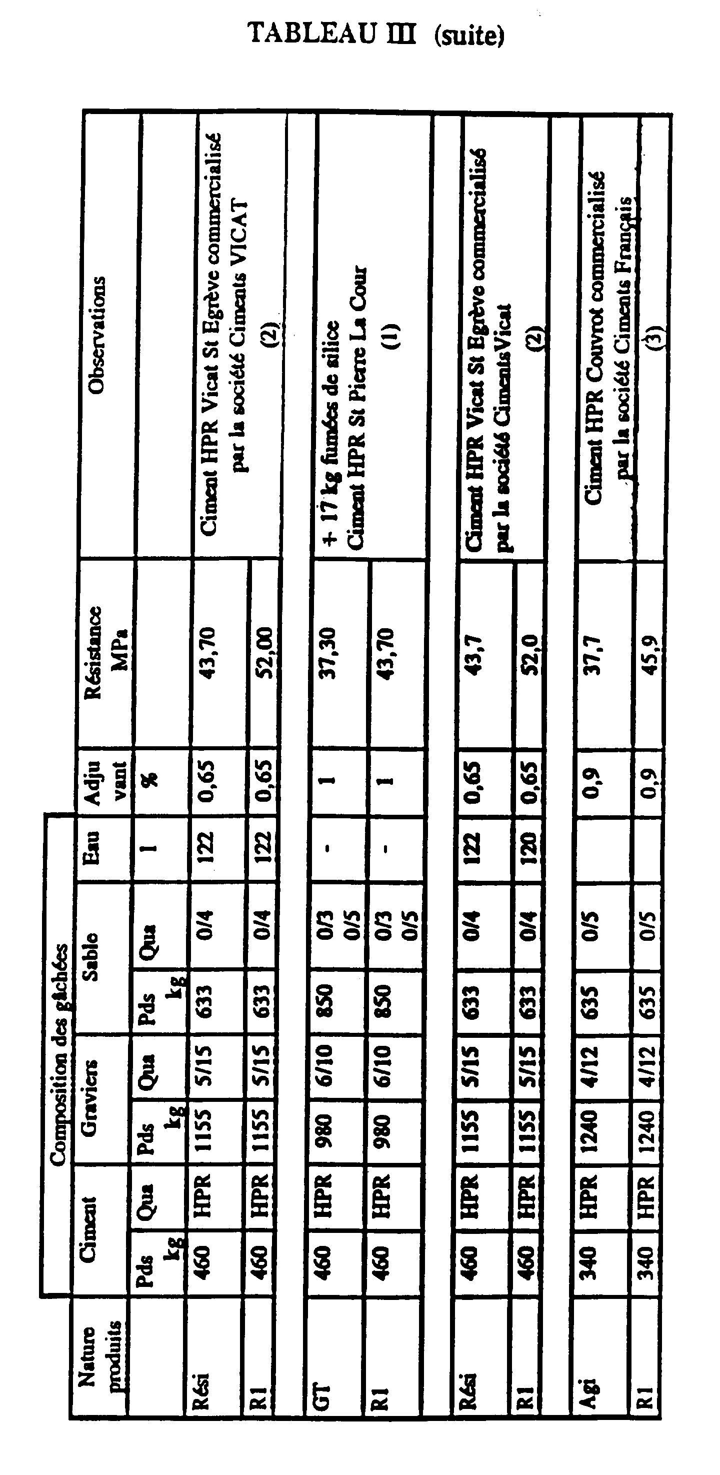

### EXEMPLE 6

Des résines ont été préparées selon l'exemple 1, à partir d'une mole de mélamine, de 3,5 moles de formaldéhyde et de quantités variables d'acide thioglycolique et d'acide sulfanilique, de façon à faire varier le rapport R et à maintenir le rapport R' à une valeur voisine de 1,25.

Les résines ainsi obtenues ont été incorporées dans des liants hydrauliques en proportion de 1 % en masse par rapport au ciment.

Des mesures de fluidité ont été effectuées avec ces résines selon la méthode dite du "mini-slump".

Les résultats ont été regroupés dans le tableau (IV) suivant.

**TABLEAU IV**

| R | Surface en cm |
|---|---|
| 0,15 | 52,5 |
| 0,25 | 124,5 |
| 0,35 | 188,80 |
| 0,45 | 129,35 |

## Revendications

1. Produits utilisables comme agents fluidifiants, susceptibles d'être obtenus par condensation en milieu aqueux d'au moins :
- un composé (a) disposant d'au moins deux fonctions amines,
- un aldéhyde (b),
- un acide (c), comportant au moins un groupement SH, ou un sel d'un tel acide,
- un acide (d) comportant au moins une fonction amine ou un sel d'un tel acide,
- et éventuellement un ou plusieurs composés (e) susceptibles de libérer un ou plusieurs ions sulfonates.

2. Produits selon la revendication 1, caractérisés en ce que le composé (a) est choisi parmi les guanamines, la mélamine, l'urée et la thio-urée.

3. Produits selon la revendication 1 ou la revendication 2, caractérisés en ce que l'aldéhyde (b) est le formaldéhyde ou l'acétaldéhyde.

4. Produits selon la revendication 3, caractérisés en ce que l'aldéhyde (b) est le formaldéhyde.

5. Produits selon l'une quelconque des revendications 1 à 4, caractérisés en ce que l'acide (c) est un acide mercapto-sulfonique ou un acide mercapto-carboxylique.

6. Produits selon l'une quelconque des revendications 1 à 5, caractérisés en ce que l'acide (c) est un acide mercapto-carboxylique.

7. Produits selon l'une quelconque des revendications 1 à 6, caractérisés en ce que l'acide (c) est un acide mercapto-carboxylique choisi parmi l'acide mercapto-butanedioïque, l'acide mercapto-acétique, l'acide mercapto-2-propionique, l'acide mercapto-3 propionique, les acides mercapto-benzoïques et leurs homologues substitués.

8. Produits selon l'une quelconque des revendications 1 à 7, caractérisés en ce que l'acide (d) est choisi dans le groupe constitué par les acides amino-sulfoniques, les acides amino-carboxyliques et l'acide sulfamique.

9. Produits selon la revendication 8, caractérisés en ce que l'acide (d) est un acide amino-sulfonique.

10. Produits selon la revendication 9, caractérisés en ce que l'acide (d) est l'acide p-aminobenzène sulfonique.

11. Produits selon l'une quelconque des revendications 1 à 10, caractérisés en ce que tout ou partie des acides est engagé sous forme de sels hydrosolubles desdits acides.

12. Produits selon l'une quelconque des revendications 1 à 11, caractérisés en ce le composé (e) est choisi parmi les sulfites, les hydrogénosulfites et les métabisulfites hydrosolubles.

13. Produits selon l'une quelconque des revendications 1 à 12, caractérisés en ce qu'ils sont obtenus par condensation, pour une mole de composé (a) de
- 1,8 à 8 moles, et de préférence 2,5 à 4,5 moles d'aldéhyde (b),
- 0,1 à 2 moles, et de préférence 0,1 à 0,5 mole d'acide (c),
- 0,1 à 2 moles, et de préférence 0,8 à 1, 2 mole d'acide (d),
- et éventuellement 0,1 à 2 moles, et de préférence 0,8 à 1,2 mole, de composé (e).

14. Produits selon l'une quelconque des revendications 1 à 13, caractérisés en ce qu'ils sont obtenus en choisissant les proportions réactionnelles de façon à ce que le rapport du nombre de moles de fonctions acides carboxyliques sur le nombre de moles de fonctions acides sulfoniques soit compris entre 0,25 et 0,45 et à ce que le rapport du nombre total de moles de fonctions acides sur le nombre de moles du composé (a) soit compris entre 1,2 et 1,3.

15. Procédé de préparation de produits utilisables comme fluidifiants, caractérisés en ce que l'on fait réagir
- un composé (a) disposant d'au moins deux fonctions amines,
- un aldéhyde (b),
- un acide (c), comportant au moins un groupement SH, ou un sel d'un tel acide,
- un acide (d) comportant au moins une fonction amine ou un sel d'un tel acide,
- et éventuellement un ou plusieurs composé(s) (e) susceptible de libérer un ou plusieurs ions sulfonates, en milieu aqueux, à pH compris entre 5 et 9 et à une température comprise entre 10 et 100°C.

16. Procédé selon la revendication 15, caractérisé en ce que le composé (a) est choisi parmi les guanamines, la mélamine, l'urée et la thio-urée.

17. Procédé selon la revendication 15 ou la revendication 16, caractérisé en ce que l'aldéhyde (b) est le formaldéhyde ou l'acétaldéhyde.

18. Procédé selon la revendication 17, caractérisé en ce que l'aldéhyde (b) est le formaldéhyde.

19. Procédé selon l'une quelconque des revendications 15 à 18, caractérisé en ce que l'acide (c) est un acide mercapto-sulfonique ou un acide mercapto-carboxylique.

20. Procédé selon l'une quelconque des revendications 15 à 19, caractérisé en ce que l'acide (c) est un acide mercapto-carboxylique.

21. Procédé selon l'une quelconque des revendications 15 à 20, caractérisé en ce que l'acide (c) est un acide mercapto-carboxylique choisi parmi l'acide mercapto-butanedioïque, l'acide mercapto-acétique, l'acide mercapto-2 propionique, l'acide mercapto-3 propionique, les acides mercapto-benzoïques et leurs homologues substitués.

22. Procédé selon l'une quelconque des revendications 15 à 21, caractérisé en ce que l'acide (d) est un acide amino-sulfonique ou amino-carboxylique.

23. Procédé selon la revendication 22, caractérisé en ce que l'acide (d) est un acide amino-sulfonique.

24. Procédé selon la revendication 23, caractérisé en ce que l'acide (d) est l'acide p-aminobenzène sulfonique.

25. Procédé selon l'une quelconque des revendications 15 à 24, caractérisé en ce que tout ou partie des acides est engagé sous forme de sels hydrosolubles desdits acides.

26. Procédé selon l'une quelconque des revendications 15 à 25, caractérisé en ce que le composé (e) est choisi parmi les sulfites, les hydrogénosulfites et les métabisulfites hydrosolubles.

27. Procédé selon l'une quelconque des revendications 15 à 26, caractérisé en ce que la réaction est conduite avec les réactifs dans les proportions suivantes rapportées à une mole de composé (a) :
- 1,8 à 8 moles, et de préférence 2,5 à 4,5 moles d'aldéhyde (b),
- 0,1 à 2 moles, et de préférence 0,1 à 0,5 mole d'acide (c),
- 0,1 à 2 moles, et de préférence 0,8 à 1,2 mole d'acide (d),
- et éventuellement 0,1 à 2 moles, et de préférence 0,8 à 1, 2 mole de composé (e).

28. Procédé selon l'une quelconque des revendications 20 à 27, caractérisé en ce que les proportions réactionnelles sont choisies de façon à ce que le rapport du nombre de moles de fonctions acides carboxyliques sur le nombre de moles de fonctions acides sulfoniques soit compris entre 0,25 et 0,45 et à ce que le rapport du nombre total de moles de fonctions acides sur le nombre de moles du composé (a) soit compris entre 1,2 et 1,3.

29. Utilisation des produits selon l'une quelconque des revendications 1 à 14 en tant qu'agents fluidifiants pour liants hydrauliques.

30. Utilisation selon la revendication 29, caractérisée en ce que la proportion d'agent fluidifiant est comprise entre 0,01 % et 25 %, et de préférence inférieure à 5 %, rapporté à la masse de liant hydraulique.

## Patentansprüche

1. Produkte, die als Verflüssigungsmittel verwendbar und dafür geeignet sind, durch Kondensation im wäßrigen Milieu erhalten zu werden aus mindestens:
- einer Verbindung (a), die mindestens zwei Amingruppen zur Verfügung stellt,
- ein Aldehyd (b),
- eine Säure (c), welche mindestens eine SH-Gruppe oder ein Salz einer solchen Säure umfaßt,,
- eine Säure (d), welche mindestens eine Aminfunkton oder ein Salz einer solchen Säure umfaßt,
- und eventuell eine oder mehrere Verbindungen (e), die dafür geeignet sind, ein oder mehrere Schwefelionen freizusetzen.

2. Produkte gemäß Anspruch 1,
**dadurch gekennzeichnet**,
daß die Verbindung (a) unter den Guaninen, Melamin, Harnstoff oder Thioharnstoff ausgewählt wird.

3. Produkte gemäß Anspruch 1 oder Anspruch 2, dadurch gekennzeichnet, daß das Aldehyd (b) Formaldehyd oder Acetaldehyd ist.

4. Produkte gemäß Anspruch 3, dadurch gegenzeichnet, daß das Aldehyd (b) Formaldehyd ist.

5. Produkte gemäß einem der Ansprüche 1 bis 4, dadurch gekennzeichnet, daß die Säure (c) eine Mercapto-Schwefelsäure oder eine Mercapto-Carboxyl-Säure ist.

6. Produkte gemäß einem der Ansprüche 1 bis 5, dadurch gekennzeichnet, daß die Säure (c) eine Mercapto-Carboxyl-Säure ist.

7. Produkte gemäß einem der Ansprüche 1 bis 6, dadurch gekennzeichnet, daß die Säure (c) eine Mercapto-Carboxyl-Säure ist, die aus Mercypto-Isobuttersäure, Mercapto-Essigsäure, Mercaptro-2-Propansäure, Mercapto-3-Propansäure, den Mercapto-Benzolsäuren und ihren homologen Substituten ausgewählt wird.

8. Produkte gemäß einem der Ansprüche 1 bis 7, dadurch gekennzeichnet, daß die Säure (d) aus der Gruppe ausgewählt wird, die durch die Aminoschwefelsäure, die Amino-Carboxyl-Säuren und die Sulfaminsäure gebildet wird.

9. Produkte gemäß Anspruch 8, dadurch gekennzeichnet, daß die Säure (d) eine Amino-Sulfon-Säure ist.

10. Produkte gemäß Anspruch 9, dadurch gekennzeichnet, daß die Säure (d) p-Amino-Benzol-Sulfonsäure ist.

11. Produkte gemäß einem der Ansprüche 1 bis 10, dadurch gekennzeichnet, daß alle oder Teile der Säure in Form von wasserlöslichen Salzen der besagten Säuren verwendet werden.

12. Prcdukte gemäß einem der Ansprüche 1 bis 11, dadurch gekennzeichnet, daß die Verbindung (e) ausgewählt wird unter den Sulfiten, den Hydrogensulfiten und den wasserlöslichen Metabisulfiten.

13. Produkte gemäß einem der Ansprüche 1 bis 12, dadurch gekennzeichnet, daß sie durch Kondensation erhalten werden, für ein Mol der Verbindung (a)
- 1,8 bis 8 Mol, und vorzugsweise 2,5 bis 4,5 Mol, Aldehyd (b),
- 0,1 bis 2 Mol, und vorzugsweise 0,1 bis 0,5 Mol, der Säure (c),
- 0,1 bis 2 Mol, und vorzugsweise 0,8 bis 1,2 Mol, der Säure (d),
- und eventuell 0,1 bis 2 Mol, und vorzugsweise 0,8 bis 1,2 Mol, der verbindung (e).

14. Produkte gemäß einem der Ansprüche 1 bis 13, dadurch gekennzeichnet, daß sie erhalten werden, indem die Reaktionsverhältnisse so gewählt werden, daß das Verhältnis der Anzahl der Mole der carboxylsäuregruppen zur Anzahl der Mole der Schwefelsäuregruppen zwischen 0,25 und 0,45 eingeschlossen ist und daß das Verhältnis der Gesamtzahl der Mole der Säuregruppen zur Anzahl der Mole der Verbindung (a) zwischen 1,2 und 1,3 eingeschlossen ist.

15. Herstellungsverfahren des Produkts, das als Verflüssigungsmittel verwendbar ist, dadurch gekennzeichnet, daß man
- eine Verbindung (a), die mindestens zwei Amingruppen zur Verfügung stellt,
- ein Aldehyd (b),
- eine Säure (c), die mindestens eine SH-Gruppe oder ein Salz einer solchen Säure umfaßt,
- eine Säure (d), welche mindestens eine Amingruppe oder ein Salz einer solchen Säure umfaßt,
- und eventuell eine oder mehrere Verbindungen (e) miteinander reagieren läßt, die dazu geeignet sind, ein oder mehrere Schwefelionen freizusetzen, im wäßrigen Milieu reagieren läßt, bei einem pH-Wert, der zwischen 5 und 9 liegt und einer Temperatur, die zwischen 10 und 100°C liegt.

16. Verfahren gemäß Anspruch 15, dadurch gegenzeichnet, daß die Verbindung (a) unter den Guanaminen, Melamin, Harnstoff oder Thio-Harnstoff ausgewählt wird.

17. Verfahren gemäß Anspruch 15 oder Anspruch 16, dadurch gekennzeichnet, daß das Aldehyd (b) Formaldehyd oder Acetaldehyd ist.

18. Verfahren gemäß Anspruch 17, dadurch gegenzeichnet, daß das Aldehyd (b) Formaldehyd ist.

19. Verfahren gemäß einem der Ansprüche 15 bis 18, dadurch gekennzeichnet, daß die Säure (c) Mercapto-Sulfonsäure oder Mercapto-Carboxylsäure ist.

20. Verfahren gemäß einem der Ansprüche 15 bis 19, dadurch gekennzeichnet, daß die Säure (c) Mercapto-Carboxylsäure ist.

21. Verfahren gemäß einem der Ansprüche 15 bis 20, dadurch gekennzeichnet, daß die Säure (c) Mercapto-Carboxylsäure ist, die aus Mercapto-Isobuttersäure, Mercapto-Essigsäure, Mercapto-2-Propansäure, Mercapto-3-Propansäure, den Mercapto-Benzolsäuren und ihren homologen Substituten ausgewählt wird.

22. Verfahren gemäß einem der Ansprüche 15 bis 21, dadurch gekennzeichnet, daß die Säure (d) eine Amino-Schwefel- oder eine Amino-Carboxyl-Säure ist.

23. Verfahren gemäß einem der Ansprüche 22, dadurch gekennzeichnet, daß die Säure (d) eine Amino-Schwefelsäure ist.

24. Verfahren gemäß einem der Ansprüche 23, dadurch gekennzeichnet, daß die Säure (d) p-Aminobenzol-Schwefelsäure ist.

25. Verfahren gemäß einem der Ansprüche 15 bis 24, dadurch gekennzeichnet, daß alle oder Teile der Säuren in Form von wasserlöslichen Salzen der besagten Säuren verwendet werden.

26. Verfahren gemäß einem der Ansprüche 15 bis 25, dadurch gekennzeichnet, daß die Zusammensetzung (e) ausgewählt wird unter den Sulfiten, den Hydrogensulfiten und den wasserlöslichen Metabisulfiten.

27. Verfahren gemäß einem der Ansprüche 15 bis 26, dadurch gekennzeichnet, daß die Reaktion mit den Reagenzien in den folgenden Verhältnissen geführt wird, die auf ein Mol der Zusammensetzung (a) bezogen sind:
- 1,8 bis 8 Mol, und vorzugsweise 2,5 bis 4,5 Mol des Aldehyds (b),
- 0,1 bis 2 Mol, und vorzugsweise 0,1 bis 0,5 Mol der Säure (c),
- 0,1 bis 2 Mol, und vorzugsweise 0,8 bis 1,2 Mol der Säure (d),
- und eventuell 0,1 bis 2 Mol, und vorzugsweise 0,8 bis 1,2 Mol der Zusammensetzung (e).

28. Verfahren gemäß einem der Ansprüche 20 bis 27, dadurch gekennzeichnet, daß die Reaktionsverhältnisse so gewählt werden ,daß das Verhältnis der Anzahl der Mole der Carboxyl-Säuregruppen zur Anzahl der Mole der Sulfon-Säuregruppen zwischen 0,25 und 0,45 eingeschlossen ist, und daß das Verhältnis der Gesamtzahl der Mole der Säuregruppen zur Anzahl der Mole der Zusammensetzung (a) zwischen 1,2 und 1,3 eingeschlossen ist.

29. Verwendung der Produkte gemäß einem der Ansprüche 1 bis 14 insofern, als sie Verflüssigungsmittel für hydraulische Bindemittel sind.

30. Verwendung gemäß Anspruch 29, dadurch gekennzeichnet, daß der Anteil der Verflüssigungsmittel bezüglich der Masse der hydraulischen Bindemittel zwischen 0,01% und 25% eingeschlossen ist, und vorzugsweise kleiner 5% ist.

## Claims

1. Products for use as thinning agents obtainable by condensation in an aqueous medium from at least :
- a compound (a) having at least two amine functions,
- an aldehyde (b),
- an acid (c), comprising at least one SH group or a salt thereof,
- an acid (d) comprising at least one amine function or a salt thereof,
- and optionally one or several compounds (e) capable of releasing one or several sulphonate ions.

2. Products according to Claim 1, characterised in that compound (a) is selected from guanamines, melamine, urea and thiourea.

3. Products according to Claim 1 or Claim 2, characterised in that aldehyde (b) is formaldehyde or the acetaldehyde.

4. Products according to Claim 3, characterised in that the aldehyde (b) is formaldehyde.

5. Products according to any one of Claims 1 to 4, characterised in that the acid (c) is a mercapto-sulphonic acid or a mercapto-carboxylic acid.

6. Products according to any one of Claims 1 to 5, characterised in that the acid (c) is a mercapto-carboxylic acid.

7. Products according to any one of Claims 1 to 6, characterised in that acid (c) is a mercapto-carboxylic acid selected from mercapto-butanedioic acid, mercapto-acetic acid, mercapto-2-propionic acid, mercapto-3 propionic acid, mercapto-benzoic acids and their substituted homologues.

8. Products according any one of Claims 1 to 7, characterised in that acid (d) is selected from the group comprising amino-sulphonic acids, amino-carboxylic acids and sulphamic acid.

9. Products according to Claim 8, characterised in that acid (d) is an amino-sulphonic acid.

10. Product according to Claim 9 characterised in that acid (d) is p-aminobenzene sulphonic acid.

11. Products according to any one of Claims 1 to 10, characterised in that all or some of the acids are used in the form of the hydrosoluble salts thereof.

12. Products according to any one of clams 1 to 11, characterised in that compound (e) is selected from sulphites, hydrogenosulphites and hydrosoluble metabisulphates.

13. Products according to any one of Claims 1 to 12, characterised in that they are obtained by condensation, for one mole of compound (a) from,
- 1.8 to 8 moles, preferably 2.5 to 4.5 moles of aldehyde (b),
- 0.1 to 2 moles, preferably 0.1 to 0.5 moles of acid (c),
- 0.1 to 2 moles, preferably 0.8 to 1.2 moles of acid (d),
- and optionally 0 to 2 moles, preferably 0.8 to 1.2 moles of compound (e).

14. Products according to any one of Claims 1 to 13, characterised in that they are obtained selecting the reactive parts so that the ratio of the number of moles of carboxylic acid functions to the number of moles of sulphonic acid functions is between 0.25 and 0.45, and the ratio of the total number of moles of acid functions to the number of moles of compound (a) is between 1.2 and 1.3.

15. Process for preparing products used as thinners, characterised in that
- a compound (a) having at least two amine functions,
- an aldehyde (b),
- an acid (c) comprising at least one SH group or a salt thereof,
- an acid (d) comprising at least one amine function or a salt thereof,
- and optionally one or several compounds (e) capable of releasing one or several sulphonate ions, in an aqueous medium with a pH of between 5 and 9, at a temperature of between 10 and 100°C
are reacted together.

16. Process according to Claim 15, characterised in that compound (a) is selected from guanamines, melamine, urea and thio-urea.

17. Process according to Claim 15 or Claim 16, characterised in that aldehyde (b) is formaldehyde or acetaldehyde.

18. Process according to Claim 17, characterised in that aldehyde (b) is formaldehyde.

19. Process according to any one of Claims 15 to 18, characterised in that acid (c) is mercapto-sulphonic acid or mercapto-carboxylic acid.

20. Process according to any one of Claims 15 to 19, characterised in that acid (c) is mercapto-carboxylic acid.

21. Process according to any one of Claims 15 to 20, characterised in that acid (c) is mercapto-carboxylic acid selected from mercapto-butanedioic acid, mercapto-acetic acid, mercapto-2 propionic acid, mercapto-3 propionic acid, mercapto-benzoic acids and their substitute homologues.

22. Process according to any one of Claims 15 to 21, characterised in that acid (d) is amino-sulphonic acid or amino-carboxylic acid.

23. Process according to Claim 22, characterised in that acid (d) is amino-sulphonic acid.

24. Process according to Claim 23, characterised in that acid (d) is p-amino benzene sulphonic acid.

25. Process according to any one of Claims 15 to 24, characterised in that all or some of the acids are used in the form of the hydrosoluble salts thereof.

26. Process according to any one of Claims 15 to 25, characterised in that compound (e) is selected from sulphites, hydrogenosulphites and hydrosoluble metabisulphites.

27. Process according to any one of Claims 15 to 26, characterised in that the reaction is carried out with reagents in the following proportions relating to one mole of compound (a):
- 1.8 to 8 moles, preferably 2.5 to 4.5 moles of aldehyde (b),
- 0.1 to 2 moles, preferably 0.1 to 0.5 moles of acid (c),
- 0.1 to 2 moles, preferably 0.8 to 1.2 moles of acid (d),
- and optionally 0.1 to 2 moles, preferably 0.8 to 1.2 moles of compound (e).

28. Process according to any one of Claims 20 to 27, characterised in that the reacting parts are selected so that the ratio of the number of moles of carboxylic acid functions to the number of moles of sulphonic acid functions is between 0.25 and 0.45, and the ratio of the total number of moles of acid functions to the number of moles of compound (a) is between 1.2 and 1.3.

29. Use of the products according to any one of Claims 1 to 14 as thinning agents for hydraulic binding agents.

30. Use according to Claim 29, characterised in that the proportion of thinning agent is between 0.01 % and 25 %, preferably less than 5% in relation to the mass of hydraulic binding agent.
